# EUROPEAN PATENT SPECIFICATION

(11) **EP 1 410 886 B1**
(45) Date of publication and mention of the grant of the patent: **09.08.2006**
(21) Application number: 03292534.9
(22) Date of filing: 13.10.2003
(51) Int. Cl.: B27B 5/29, B23D 45/04

(54) **Bevel angle detent system for a compound miter saw**
Gehrungswinkeleinrastsystem für eine Kapp- und Gehrungssäge
Système d'indexage de l'angle de biseau pour une scie à onglet du type combiné

(30) Priority: 16.10.2002 US 271432
(43) Date of publication of application: 21.04.2004
(73) Proprietor: Robert Bosch Tool Corporation, Broadview, Illinois 60155 (US)
(72) Inventor: Svetlik, Kenneth N., Schaumburg Illinois 60193 (US); Kuras, Mark, Des Plaines Illinois 60016 (US); Javanshad, Abbas, Skokie Illinois 60077 (US); Liao, Yi-Te, 540 Nan-Tou (TW); Huang, Chih-Yung, 540 Nan-Tou (TW)
(74) Representative: Loisel, Bertrand

(56) References cited:
- EP-A- 0 779 122
- US-A- 6 035 754
- US-A1- 2003 150 311
- PATENT ABSTRACTS OF JAPAN vol. 1997, no. 02, 28 February 1997 (1997-02-28) -& JP 08 252801 A (MAKITA CORP), 1 October 1996 (1996-10-01)

## Description

### FIELD OF THE INVENTION

The invention generally relates to a power tool according to the preamble of claim 1 and more particularly relates to a miter saw having a pivotable support arm with a detent mechanism to provide pivot stops at certain bevel angles. Such a power tool is known from JP 08 252801A.

### BACKGROUND OF THE INVENTION

Power miter saws are generally known. Typically, a power miter saw includes a base having a fixed support platform having a rip fence and a turntable that is rotatably mounted to the base, a movable arm assembly extending from the turntable, and power saw unit mounted to the arm for cutting a workpiece on the turntable. To make standard miter cuts, the arm holds the saw unit so that its circular blade is generally vertical.

A compound miter saw additionally includes a bevel angle joint that permits the angular adjustment of the arm to hold the blade at a bevel angle, generally between 0-45 degrees from vertical. Detent mechanisms are generally known for locking the bevel angle joint at common angles, for example 0, 33.9 or 45 degrees, however, an improved detent mechanism is desired. Some known detent mechanisms include steps integrated into the structure of the support arm, wherein the bevel angle is limited by contact of one of the steps against detent pin. It is desirable to provide a miter saw having a step-like detent mechanism that permits easy adjustment of the position of one or more of the steps relative to the arm to facilitate fine adjustment of a corresponding pivot stop position. PATENT ABSTRACT OF JAPAN, vol. 1997, no. 2, Feb. 28, 1997 and JP 08 252801 A disclose a leaning type saw device in which a rocking arm can be positioned at three angles by a single operating pin.

### BRIEF SUMMARY OF THE INVENTION

The invention proposes a power tool as set out in claim 1. Preferred embodiments are disclosed by dependent claims 2-16.

The invention thus provides a power tool such as a compound miter saw which permits precise adjustment of detent steps that correspond to bevel angle stops. For example, in an embodiment, a compound miter saw is provided which includes: a base; a movable support arm assembly for holding a tool unit, the support arm having a hub portion that is rotatably mounted to the base to permit rotation of the support arm relative to the base along an axis; a detent block having a plurality of generally parallel, planar surfaces adjacent surfaces are positioned at different axial depths relative to each other so that the adjacent surfaces are separated by a respective step; a detent pin carried by the base for movement in a direction generally parallel to the axis and generally perpendicular to the surfaces; and a biasing element urging the detent pin into contact against one of the surfaces; wherein each surface defines a range of possible bevel angle positions of the support arm, and the step can abut the pin to limit a pivoting of the support arm at a corresponding predetermined bevel angle and wherein the detent block is adjustably mounted to the support arm to permit adjustment of the position of the step relative to the support arm. Preferably, each of the steps is planar and radially oriented relative to the axis.

In an embodiment, the hub portion includes a recess shaped to receive the block and to provide space for adjustment of the block either clockwise or counterclockwise relative to a center of the hub. The hub further includes fasteners, such as set screws, to secure the detent block at a desired position.

In an embodiment, the compound miter saw further includes a linkage operable to move the detent pin. With the linkage, a user can retract the detent pin to clear one of the steps, permitting the support arm to move to a bevel angle beyond the pivot stop defined by the respective step. Preferably, the linkage includes a handle and is positioned generally at a side of the base which is generally opposite of the hub.

In an embodiment, the detent block is generally arcuate, and wherein the detent block is mounted to the hub generally concentrically to the axis.

In an embodiment, at least one of the steps includes a threaded bevel angle adjustment bolt to adjust the bevel angle at which the step contacts the detent pin.

Another advantage of the present invention is that it provides a compound miter saw in which a "home" bevel angle position, such as a vertical (0°) position, is precisely adjustable.

A further advantage of the present invention is that it provides a compound miter saw that has few parts and which is simple to assemble in a precise manner.

Yet another advantage of the present invention is that it provides a compound miter saw having a tiltable support arm, wherein pivot stops can be released by a linkage actuatable from a front of a saw. A related advantage is that the miter saw of the invention provides enhanced safety, avoiding a need for a user to reach around or over the saw to move a detent pin located near a rear of the saw.

Additional features and advantages of the present invention are described in, and will be apparent from, the following description, figures and claims.

### BRIEF DESCRIPTION OF THE DRAWINGS

FIG. 1 is a perspective view of a compound miter saw having features in accordance with teachings of the present invention.

FIG. 2 is a schematic front elevational view of the saw, showing exemplary saw blade bevel angles of 45°L, 33.9°L, 0°, 33.9°R and 45°R to which the support arm can be pivoted.

FIG. 3 is a perspective view of a support arm and a portion of the tool unit, showing a front of the hub and detent block mounted thereto.

FIG. 4 is a fragmentary, perspective view of the support arm, showing a front of the hub and detent block mounted thereto.

FIG. 5 is a schematic, perspective view of the detent block, detent pin, and auxiliary pin.

FIG. 6 is a fragmentary, perspective view of a rear side of the support arm.

FIG. 7 is an exploded, perspective view of a linkage for retracting the detent pin.

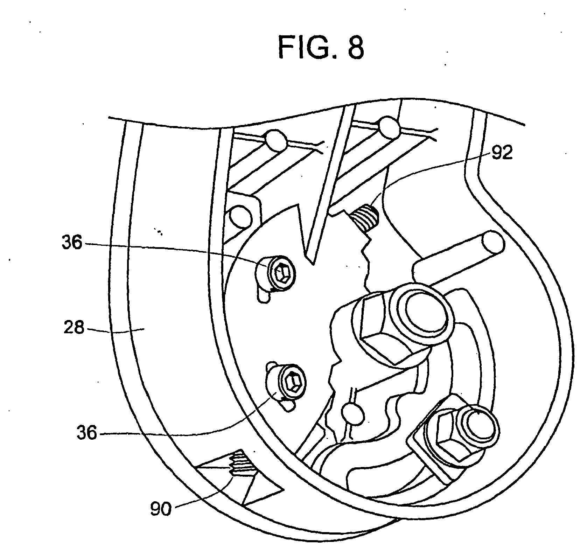

FIG. 8 is a fragmentary view of a rear side of the support arm from a different perspective than FIG. 6.

### DETAILED DESCRIPTION OF THE PRESENTLY PREFERRED EMBODIMENTS

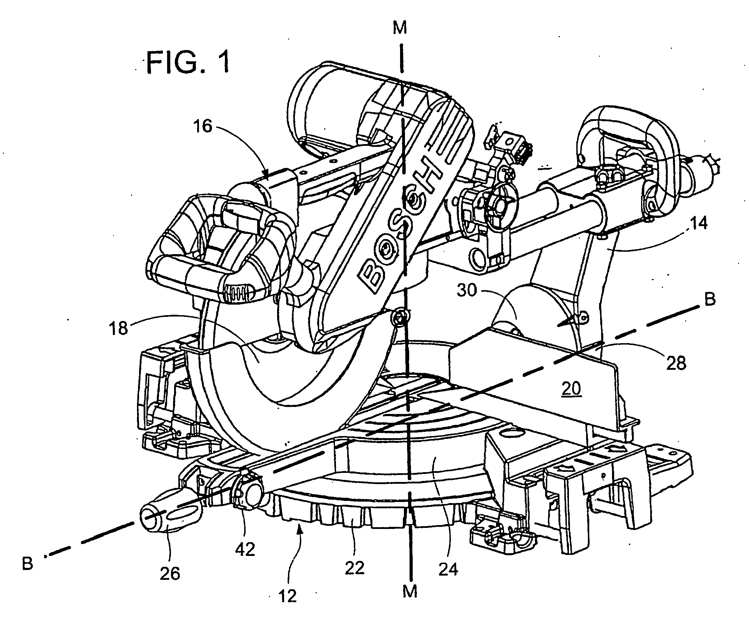

Referring now to the drawings, wherein like numerals designate like components, FIG. 1 illustrates an exemplary compound miter saw 10 incorporating features according to teachings of the present invention.

As illustrated in FIG. 1, the miter saw 10 generally includes a base 12, a movable support arm 14 pivotably mounted to the base, and a tool unit 16. As illustrated, the tool unit 16 is a power saw having a circular blade 18. The base 12 is configured to support a workpiece and, in an embodiment, the base includes a rip fence 20 to hold the workpiece.

The miter saw is constructed so that the angle of the blade 18 can be varied for cutting the workpiece. For angular adjustment of the saw blade 18 on a "miter angle" about a vertical miter axis M, still referring to FIG. 1, the base 12 includes a stationary portion 22 that is supported on a stationary surface, such as a workbench (not shown) and, and a turntable 24 that is rotatably mounted to the stationary portion 22. The position of the turntable 24 corresponds to the miter angle of the saw blade 18 relative to the rip fence 20 on the base 12. A turntable handle 26 is provided for selection of the miter angle.

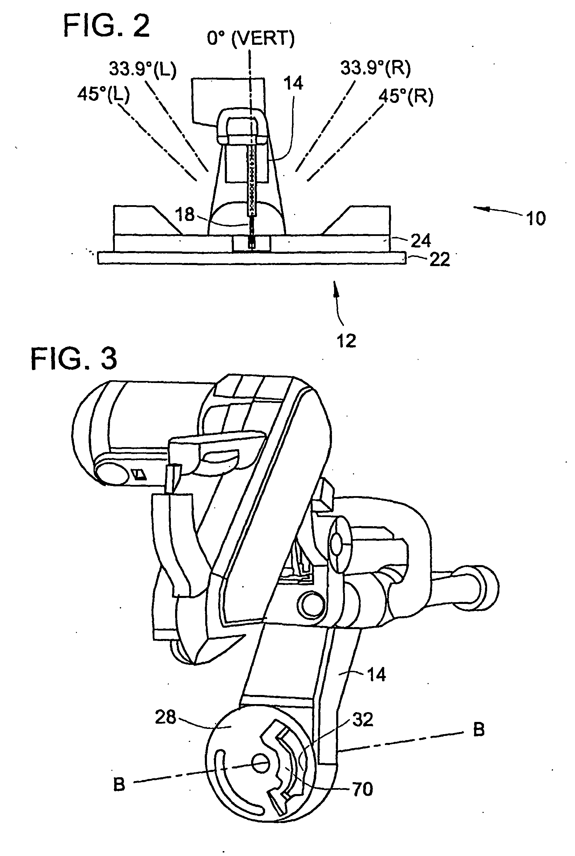

For angular adjustment of the tool unit on a "bevel angle" about a horizontal bevel axis B, the support arm 14 is pivotally mounted to the base 12. More specifically, the support arm 14 has a hub portion 28 (FIGS. 1 and 3) that is rotatably mounted to a pivot housing portion 30 (FIG. 1) of the turntable 24 to permit rotation of the support arm 14 relative to the turntable 24 about the bevel axis B. In order to selectively hold the tool unit 16 at certain common bevel angles, the miter saw 10 includes a detent mechanism, described below in greater detail. For example, FIG. 2 schematically illustrates saw blade bevel angles of 45°L, 33.9°L, 0°, 33.9°R and 45°R at which the detent mechanism provides pivot stops of the support arm 14. The detent mechanism also permits the support arm to be tilted within certain angular ranges between the pivot stops.

The detent mechanism includes a stepped detent block that is adjustably mounted to the support arm and which is selectively engageable by a movable detent pin carried by the turntable. According to an aspect of the invention, the position of the detent block can be adjusted relative to the hub portion to result in a precise setting of a "home" position of the support arm, such as the 0° (vertical) position.

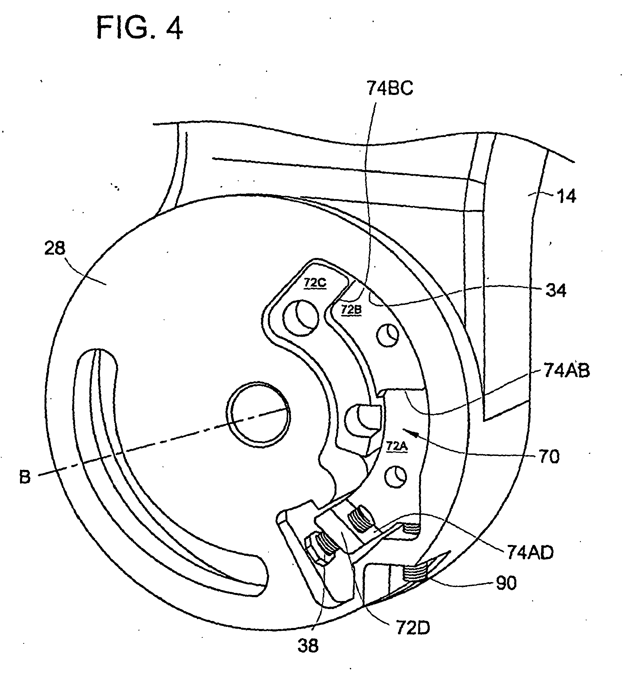

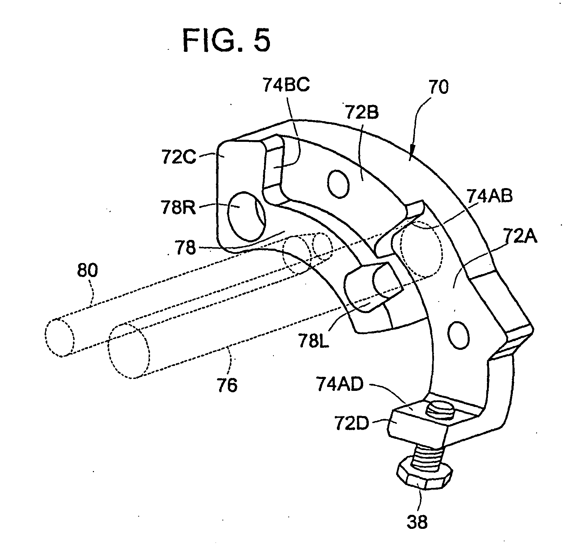

In an embodiment as illustrated in FIGS. 4 and 5, the detent block 70 has a stepped profile. More particularly, the detent block 70 has a series of forwardly facing surfaces 72A, 72B, 72C, 72D arranged next to each other at a common radius from the bevel axis B about which the support arm 14 pivots. The detent block 70 preferably has an arcuate shape. Acting with a detent pin 76, the detent block 70 defines pivot stops to selectively restrict pivot arm from moving beyond certain bevel angles.

To define pivot stops, adjacent surfaces of the detent blocks are at different relative axial positions to define steps. For example, in the exemplary embodiment of FIGS. 4 and 5, the adjacent surfaces 72A and 72B are separated by a step 74AB, the adjacent surfaces 72B and 72C are separated by a step 74BC, and the adjacent surfaces 72A and 72D are separated by step 74AD. Each of the steps 74AB, 74BC and 74AD permits the detent block 70 to move along a particular arc of motion, limiting the angular freedom of the support arm 14 accordingly.

FIG. 5 schematically illustrates a detent pin 76 that acts against the detent block 70 to limit motion of the support arm 14 (FIGS. 1 and 3). The detent pin 76 is movably mounted to the turntable 24 (FIG. 1) to axially extend or retract relative to the surfaces 72A-D. The detent pin 76 is positioned at generally the same radius from the axis B as the surfaces 72A-D so that a tip of the pin 76 can contact perpendicularly against any one of the surfaces. A point of engagement of the detent pin 76 against the detent block 70 corresponds to a bevel angle position of the support arm 14.

The detent pin 76 is biased toward the detent block 70, so that the tip of the pin 76 can slide in contact a respective one of the surfaces 72A-D when the support arm is pivoted. Accordingly, the support arm 14 is free to pivot within a current bevel angle range as limited by contact of the detent pin 76 against the steps 74AB, 74BC, and an end of bolt 38 adjustably fixed to step 74AD. When the detent pin 76 is in contact against any one of the surfaces 72A-D, the support arm 14 is free to pivot within an angular range permitted sliding contact of the detent pin 76 against the respective surface. Additionally, the support arm 14 can freely pivot so that the detent pin 76 skips over one of the steps 74AB, 74BC, or 74AD to be received against an adjacent surface that is "deeper." For example, when the detent block 70 is positioned so that the surface 72B is contacted by the detent pin 76, the support arm 14 (FIGS. 1, 3) can be pivoted so that the detent pin 76 skips over the step 74AB moves to contact with the surface 72A, which is deeper than surface 72B. The detent pin 76 automatically extends to reside at the depth defined by the deeper surface 72A. However, the support arm 14 is prevented from freely pivoting beyond a point where the pin 76 contacts a step to one of the surfaces that is "higher." For example, with reference to FIG. 5, when the detent block 70 is positioned so that the surface 72A is contacted by the detent pin 76, the support arm 14 stops rotating when the detent pin 76 contacts the step 74AB to the "higher" surface 72B. The steps 74BC and 74AD similarly act to stop the support arm when brought into contact against the detent pin 76.

Each of the steps 74AB, 74BC and 74AD acts as a pivot stop at a predetermined bevel angle of the support arm 14. In typical use, commonly needed bevel angles are 0° (vertical) and 45° from vertical. Therefore, the detent block 70 is designed and positioned so that the step 74AB defines a pivot stop a at support arm angle of 0° (vertical), step 74BC defines a pivot stop at a support arm angle of 45° to the left, and 74AD defines a pivot stop at a support arm angle of 45° to the right. As a result, the surface 72A permits a bevel angle range of 0° to 45° to the left, the surface 72B permits a bevel angle between 0°+ to 45° to the right.

So that a user can pivot the support arm beyond a pivot stop angle, the detent pin 76 can be retracted as needed to clear one of the steps to a "higher" surface. For example, if the tip of the detent pin 76 resides on surface 72A, at which the pivot arm is positioned at a 0° bevel angle, the pin 76 can be retraced to clear the step 74AB, permitting the support arm to pivot into the bevel angle range permitted by surface 72B (0° to 45° left) The support arm to be pivoted to a bevel angle such that the pin an adjacent surface of the detent block that is less deep.

The detent block is adjustably mounted to the support arm to permit adjustment of the position of the step relative to the support arm. Referring to FIG. 3, the hub portion 28 includes a recess 32 shaped to receive the detent block 70. The recess 32 is preferably arcuate to generally correspond to the shape of the detent block 70, although the recess 32 has a dimensions which are permit opposite ends of the detent block to move. In one embodiment, the recess can have one or more openings through which respective portions of the block can project.

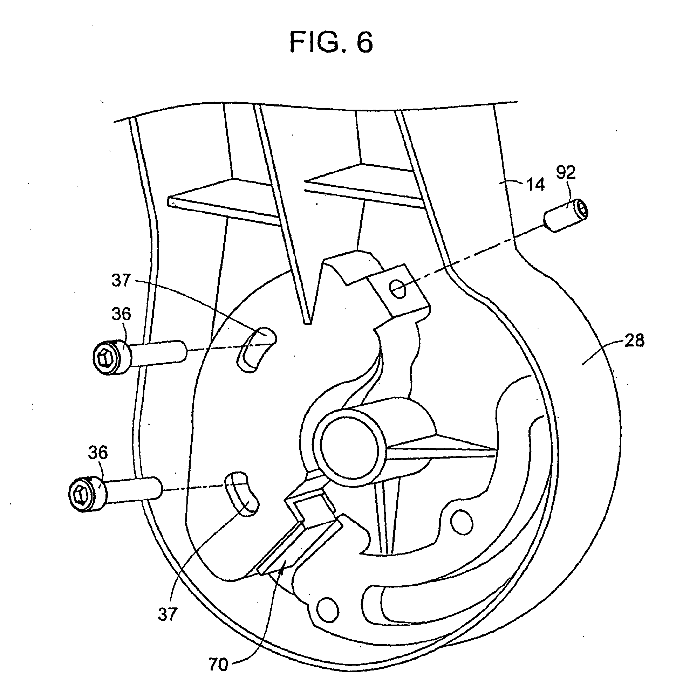

At least one fastener is provided to secure the detent block within the recess. For example, in an embodiment as illustrated in FIG. 6, detent block is secured with a pair of threaded set screws 36. Each of the set screws 36 extends through a corresponding elongate hole 37 the hub portion 28 and is threaded into a bore in a rear side of the detent block 70.

The detent block 70 can be adjusted by loosening the set screws 36, adjusting fine adjustment screws 90 and 92 to appropriately position the detent block 76 within the recess, and then tightening the set screws 36. The saw is most commonly operated in the 0° position, the home position. Therefore, it is desirable that the fine adjustment screws 90, 92 (FIG. 6) are adjusted to position the detent block 70 relative to the hub portion 28 so that the step 74AB shown in FIGS. 4 and 5 corresponds to the 0° (vertical) position of the support arm 14. When the set screws 36 are loosened, the block 70 can shift from side to side as permitted by the fine adjustment screws 90, 92 which adjustably secure against opposite ends of the block 70. Once the fine adjustment screws 90, 92 are appropriately set, the set screws 36 at the back of the block can be secured.

In an embodiment, one or more of the steps is adjustable independently relative to the adjustment of the entire block. For example, as illustrated in FIG. 5, the step 74AD of the detent block 70 includes an adjustment bolt 38. The adjustment bolt 38 can be extended or retracted as necessary to set a pivot stop for a bevel angle of 45° to the left. The adjustment bolt 38 permits the 45° (L) position to be adjusted without affecting the overall position of the block 70 or the corresponding 0° setting.

Occasionally, it is desirable to make a bevel cut that is greater than 45°, for example, to cut a molding for a corner that is not square. With reference to FIG. 5, to permit the support arm to be moved beyond 45°, the detent pin 76 can be retracted to clear either step 74AD (with adjustment bolt 38) or step 74BC so that the detent pin resides against surface 72D or 72C, respectively. When the detent pin 76 clears bolt 38 and step 74AD to the surface 72D, the support arm 14 is permitted to move to a bevel angle beyond 45° to the left, for example to about 47°, as limited by adjacent structure to prevent further movement. When the detent pin 76 clears step 74BC, the support arm 14 is permitted to move to a bevel angle beyond 45° to the right, for example to about 47°.

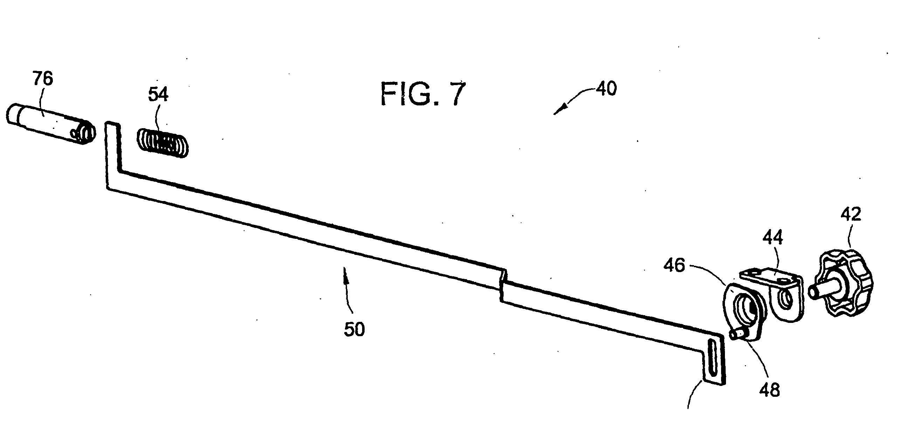

An embodiment of the invention includes a linkage for moving the detent pin. An exemplary linkage 40 is illustrated in FIG. 7, including a knob 42 that is mounted in a conveniently accessible manner at a front of the saw (see FIG. 1). The knob 42 is held rotatably by a bracket 44 that is secured against an underside of the turntable 24. A crank 46 having an eccentric peg 48 is fixed to the knob 42. A rod 50 is slidably mounted along an underside of the turntable 24. The rod 50 has a proximal end with a vertical slot 52 that receives the eccentric peg 48. The rod 50 has a distal end that is mounted to the detent pin 76. When the knob 42 is rotated, the crank 46 rotates to vary the position of the eccentric peg 48 along a circular path. The peg 48 applies a force against the edges of the slot 52 so that a horizontal component of motion is translated to the rod 50. As a result, rotation of the knob 42 is operable to extend or retract the detent pin 76. The detent pin 76 is actuatable by the knob 42 positioned generally at the front of the miter saw 10, thereby advantageously improving safety by avoiding a need for user to reach over the saw in order to adjust the bevel angle.

A coil spring 54 is provided in compression against the detent pin 76 to urge the detent pin 76 toward the detent block (FIG. 5). More particularly, one end of the spring 54 is positioned against a proximal end of the detent pin 76 and an opposite end of the spring 54 is positioned against the base 12.

The knob 42 is configured to operate in three positions. In a first position, the linkage 40 permits the detent pin 76 to move to the deepest surface 72A. Because the detent pin 76 is urged toward the detent block 70, the detent pin 76 will tend to find the deepest detent surface 72A, which defines a most often needed bevel angle range of 0° to 45° to the left. For example, if the pivot arm is positioned so that the detent pin 76 contacts any of the higher surfaces 72B, 72C, or 72D, the pin automatically steps downward as a user pivots the support arm toward the position defined by 72A. When a user turns the knob 42 to a second position, the detent pin is retracted a sufficient distance to clear the step 74AB, but not enough to clear the steps 74AD (with bolt 38) or 74BC, permitting the pivot arm to move to the right as much as 45°. When a user turns the knob 42 to a third position, the detent pin 76 is retracted a sufficient distance to clear the steps 74AD (with bolt 38) or 74BD, permitting a user to move the support arm to a bevel angle greater than 45° to the left or right, respectively.

For certain types of crown molding or other specialty applications, it is desirable to make a cut at a specific bevel angle, for example 33.9°, to achieve a correct corner fit. To provide a pivot stop at an auxiliary angle such as 33.9°, the detent block 70 has an auxiliary surface 78 having a pair of auxiliary detent holes 78L and 78R, as shown in FIG. 5. An auxiliary pin 80 is carried on the base movement to extend or retract perpendicularly to the auxiliary surface 78. Normally, the auxiliary pin 80 is locked in a retracted position clear from the auxiliary surface 78 of the detent block 70. However, when a user desires to lock the support arm 14 at the auxiliary angle, the auxiliary pin 80 is released so that is biased against the auxiliary surface 78. As the arm 14 is pivoted in the vicinity of the desired auxiliary bevel angle, the auxiliary pin 80 will find the auxiliary detent hole 78L or 78R, locking the support arm at the corresponding auxiliary bevel angle. In the embodiment illustrated in FIG. 5, the detent holes 78L and 78R correspond to auxiliary bevel angles of 33.9° to the left and 33.9° to the right of vertical, respectively.

## Claims

1. A power tool (10) comprising :
a base (12);
a support arm (14) pivotably mounted to the base for pivotable motion about an axis, the support arm supporting a tool unit (16) ; and
a detent block (70) mounted to the support arm, **characterized in that** the detent block has a series of forwadly facing surfaces (72A; 72B, 72C; 72D) arranged concentrically relative to the axis, adjacent surfaces being separated from each other by a respective step (74AB; 74BC; 74AD);
a detent pin (76) is movably mounted to the base and aligned to contact perpendicularly against one of said surfaces, the support arm being free to pivot in a bevel angle range permitted by the pin along a respective one of said surfaces, at least one of the steps defining a respective pivot stop corresponding to a bevel angle of the support arm at which the detent pin abuts the step;
wherein the detent block is mounted to the support arm in a manner such that the detent block is adjustably movable relatively to the support arm (14) to a selected fixed position to vary the bevel angle of the support arm at which the detent pin abuts the step.

2. The power tool of claim 1, wherein the support arm includes a recess (32) shaped to generally receive the block, and further including at least one fastener operable to secure the detent block relative to the support arm.

3. The power tool of claim 2, wherein the support arm includes at least one elongate hole (37) extending to the recess, and wherein the fastener is a set screw extending through the elongate hole and threaded into the detent block.

4. The power tool according to any one of the preceding claims, further comprising a linkage (40) operable to move the detent pin.

5. The power tool of claim 4, wherein the linkage includes a knob (42) positioned generally at a side of the base that is opposite of the hub, wherein movement of the knob is operable to move the detent pin.

6. The power tool according to any one of the preceding claims, wherein the detent block is generally arcuate, and wherein the detent block is mounted to the support arm generally concentrically to the axis.

7. The power tool according to any one of the preceding claims, further comprising a threaded bolt (38) extending through the step to adjust the bevel angle of the support arm at which the pin abuts the step.

8. The power tool according to any one of the preceding claims, further comprising a biasing element to urge the detent pin toward the detent block.

9. The power tool according to any one of the preceding claims, wherein each of the steps is oriented generally radially relative to the axis.

10. The power tool according to any one of the preceding claims, wherein the support arm has a hub portion (28) rotatably mounted to the base to permit rotation of the support arm relative to the base about said axis.

11. The power tool of claim 10, wherein the hub portion includes a recess (32) shaped to generally receive the detent block, the power tool further comprising at least one fastener operable to secure the detent block relative to the hub portion.

12. The power tool of claim 11, wherein the hub portion includes at least one elongate hole through the hub portion in a generally concentric orientation relative to the axis, and wherein the fastener is a set screw extending through the elongate hole and threaded into the detent block.

13. The power tool according to any one of the preceding claims, wherein the detent block is a unitary structure.

14. The power tool according to any one of the preceding claims, wherein the tool unit is a saw having a circular blade (18).

15. The power tool according to any one of the preceding claims, wherein the detent block is mounted for adjustable movement relative to the arm, the power tool further comprising a pair of fine adjustment screws (90; 92), each of the screws threaded through the arm in contact against the block, the screws respectively contacting the detent block generally in opposite directions, wherein the screws permit adjustment of the predetermined bevel angle.

16. The power tool according to any one of the preceding claims, further comprising a threaded adjustment bolt extending through the step at a position contact the detent pin, rotation of the bolt varying the predetermined bevel angle.

## Patentansprüche

1. Motorbetriebenes Werkzeug (10), umfassend:
eine Grundplatte (12);
einen Tragarm (14), der für eine drehbare Bewegung um eine Achse drehbar an der Grundplatte angebracht ist, worin der Tragarm eine Werkzeugeinheit (16) trägt; und
einen Einrastblock (70), der an dem Tragarm angebracht ist,
**dadurch gekennzeichnet, dass**
der Einrastblock eine Reihe nach vorn weisender Flächen (72A; 72B; 72C; 72D) aufweist, welche konzentrisch zu der Achse angeordnet sind, worin benachbarte Flächen voneinander durch eine jeweilige Stufe (74AB; 74BC; 74AD) getrennt sind;
einen Einrastbolzen (76), der beweglich an der Grundplatte befestigt ist und ausgerichtet ist, um in senkrechter Berührung gegen eine der Flächen zu sein, worin der Tragarm frei ist, sich in einem Fasenwinkelbereich zu drehen, welcher durch den Bolzen entlang jeweils einer der Flächen zugelassen ist, worin wenigstens eine der Stufen einen jeweiligen Drehstopp entsprechend einem Fasenwinkel des Tragarms definiert, bei welchem der Einrastbolzen an der Stufe anliegt; worin der Einrastblock an dem Tragarm in einer Weise angebracht ist, dass der Einrastblock einstellbar beweglich relativ zu dem Tragarm (14) zu einer ausgewählten befestigten Stellung ist, um den Fasenwinkel des Tragarms abzuwandeln, bei welchem der Einrastbolzen an der Stufe anliegt.

2. Motorbetriebenes Werkzeug nach Anspruch 1, worin der Haltearm eine Ausnehmung (32) umfasst, welche so geformt ist, dass sie allgemein den Block aufnimmt, und ferner wenigstens ein Befestigungselement umfasst, das in der Lage ist, den Einrastblock relativ zu dem Tragarm zu sichern.

3. Motorbetriebenes Werkzeug nach Anspruch 2, worin der Tragarm wenigstens ein längliches Loch (37) umfasst, welches sich zu der Ausnehmung erstreckt, und worin das Befestigungselement eine Stellschraube ist, die sich durch das längliche Loch erstreckt und in den Einrastblock hineingeschraubt ist.

4. Motorbetriebenes Werkzeug nach einem der voranstehenden Ansprüche, ferner umfassend ein Gestänge (40), das dazu in der Lage ist, den Einrastbolzen zu bewegen.

5. Motorbetriebenes Werkzeug nach Anspruch 4, worin das Gestänge einen Drehknopf (42) umfasst, der allgemein an einer gegenüber der Nabe angeordneten Seite der Grundplatte angebracht ist, worin die Bewegung des Drehknopfes in der Lage ist, den Einrastbolzen zu bewegen.

6. Motorbetriebenes Werkzeug nach einem der voranstehenden Ansprüche, worin der Einrastblock allgemein bogenförmig ist, und worin der Einrastblock allgemein konzentrisch zu der Achse an dem Tragarm angebracht ist.

7. Motorbetriebenes Werkzeug nach einem der voranstehenden Ansprüche, ferner umfassend einen Gewindebolzen (38), welcher sich durch die Stufe erstreckt, um den Fasenwinkel des Tragarms einzustellen, bei welchem der Bolzen an der Stufe anliegt.

8. Motorbetriebenes Werkzeug nach einem der voranstehenden Ansprüche, ferner umfassend ein Vorspannelement, um den Einrastbolzen zu dem Einrastblock hin zu zwingen.

9. Motorbetriebenes Werkzeug nach einem der voranstehenden Ansprüche, worin jede der Stufen allgemein radial relativ zu der Achse orientiert ist.

10. Motorbetriebenes Werkzeug nach einem der voranstehenden Ansprüche, worin der Tragarm einen Nabenbereich (28) umfasst, welcher drehbar an der Grundplatte angebracht ist, um eine Drehung des Tragarms um die Achse relativ zu der Grundplatte zu gestatten.

11. Motorbetriebenes Werkzeug nach Anspruch 10, worin der Nabenbereich eine Ausnehmung (32) umfasst, welche dazu geformt ist, allgemein den Einrastblock aufzunehmen, worin das motorbetriebene Werkzeug ferner wenigstens ein Befestigungselement umfasst, welches dazu in der Lage ist, den Einrastblock relativ zu dem Nabenbereich zu sichern.

12. Motorbetriebenes Werkzeug nach Anspruch 11, worin der Nabenbereich wenigstens ein längliches Loch durch den Nabenbereich in einer allgemein konzentrischen Orientierung relativ zu der Achse umfasst, und worin das Befestigungselement eine Stellschraube ist, welche sich durch das längliche Loch erstreckt und in den Einrastblock hineingeschraubt ist.

13. Motorbetriebenes Werkzeug nach einem der voranstehenden Ansprüche, worin der Einrastblock ein einheitlicher Aufbau ist.

14. Motorbetriebenes Werkzeug nach einem der voranstehenden Ansprüche, worin die Werkzeugeinheit eine Säge mit einem kreisförmigen Blatt (18) ist.

15. Motorbetriebenes Werkzeug nach einem der voranstehenden Ansprüche, worin der Einrastblock für eine einstellbare Bewegung relativ zu dem Arm angebracht ist, worin das motorbetriebene Werkzeug ferner ein Paar Feineinstellschrauben (90; 92) umfasst, von denen jede Schraube durch den Arm in Berührung gegen den Block geschraubt ist, worin die Schrauben jeweils den Einrastblock allgemein in entgegengesetzten Richtungen berühren, worin die Schrauben eine Einstellung des vorbestimmten Fasenwinkels gestatten.

16. Das motorbetriebene Werkzeug nach einem der voranstehenden Ansprüche, ferner umfassend einen Einstell-Gewindebolzen, der sich durch die Stufe an einer Stellung in Berührung mit dem Einrastbolzen erstreckt, worin die Drehung des Bolzens den vorbestimmten Fasenwinkel abwandelt.

## Revendications

1. Outil mécanique (10) comprenant :
une embase (12) ;
un bras de support (14) monté à pivotement par rapport à l'embase en vue d'un mouvement pivotant autour d'un axe, le bras de support supportant une unité d'outillage (16) ; et
un bloc d'indexage (70) monté sur le bras de support, **caractérisé par le fait que** le bloc d'indexage comporte une série de surfaces (72A ; 72B ; 72C ; 72D) tournées vers l'avant, agencées concentriquement vis-à-vis de l'axe, des surfaces adjacentes étant séparées les unes des autres par un gradin respectif (74AB ; 74BC ; 74AD) ;
une goupille à déclic (76) montée mobile par rapport à l'embase, et alignée pour venir s'appliquer perpendiculairement contre l'une desdites surfaces, le bras de support pouvant pivoter librement dans une plage d'angles de biseau autorisée par la goupille, le long de l'une respective desdites surfaces, au moins l'un des gradins définissant une butée respective de pivotement correspondant à un angle de biseau du bras de support en présence duquel la goupille à déclic bute contre le gradin ;
dans lequel le bloc d'indexage est monté, par rapport au bras de support, de façon telle que ledit bloc d'indexage puisse effectuer des mouvements réglables vis-à-vis dudit bras de support (14), jusqu'à une position arrêtée sélectionnée, afin de faire varier l'angle de biseau du bras de support en présence duquel la goupille à déclic bute contre le gradin.

2. Outil mécanique selon la revendication 1, dans lequel le bras de support comporte un évidement (32) configuré pour recevoir l'ensemble du bloc, et présentant en outre au moins un organe de fixation pouvant être actionné en vue d'arrêter le bloc d'indexage vis-à-vis du bras de support.

3. Outil mécanique selon la revendication 2, dans lequel le bras de support comporte au moins un trou oblong (37) s'étendant vers l'évidement ; et dans lequel l'organe de fixation est une vis de réglage traversant le trou oblong et vissée dans le bloc d'indexage.

4. Outil mécanique selon l'une quelconque des revendications précédentes, comportant en outre une tringlerie (40) actionnable pour imprimer des mouvements à la goupille à déclic.

5. Outil mécanique selon la revendication 4, dans lequel la tringlerie englobe une molette (42) située, pour l'essentiel, sur un côté de l'embase qui est opposé au moyeu, un mouvement de la molette ayant pour effet d'imprimer des mouvements à la goupille à déclic.

6. Outil mécanique selon l'une quelconque des revendications précédentes, dans lequel le bloc d'indexage est de configuration générale curviligne ; et dans lequel le bloc d'indexage est monté, vis-à-vis du bras de support, pour l'essentiel concentriquement à l'axe.

7. Outil mécanique selon l'une quelconque des revendications précédentes, comportant par ailleurs un boulon (38) traversant le gradin, de manière à régler l'angle de biseau du bras de support en présence duquel la goupille bute contre le gradin.

8. Outil mécanique selon l'une quelconque des revendications précédentes, comportant en outre un élément de sollicitation, pour pousser la goupille à déclic en direction du bloc d'indexage.

9. Outil mécanique selon l'une quelconque des revendications précédentes, dans lequel chacun des gradins est orienté, pour l'essentiel, radialement par rapport à l'axe.

10. Outil mécanique selon l'une quelconque des revendications précédentes, dans lequel le bras de support présente une zone de moyeu (28) montée rotative par rapport à l'embase pour permettre une rotation du bras de support par rapport à l'embase, autour dudit axe.

11. Outil mécanique selon la revendication 10, dans lequel la zone de moyeu comporte un évidement (32) configuré pour recevoir l'ensemble du bloc d'indexage, l'outil mécanique possédant, par ailleurs, au moins un organe de fixation pouvant être actionné en vue d'arrêter le bloc d'indexage vis-à-vis de la zone de moyeu.

12. Outil mécanique selon la revendication 11, dans lequel la zone de moyeu présente au moins un trou oblong traversant ladite zone de moyeu selon une orientation globalement concentrique à l'axe ; et dans lequel l'organe de fixation est une vis de réglage traversant le trou oblong et vissée dans le bloc d'indexage.

13. Outil mécanique selon l'une quelconque des revendications précédentes, dans lequel le bloc d'indexage est un ensemble structurel unitaire.

14. Outil mécanique selon l'une quelconque des revendications précédentes, dans lequel l'unité d'outillage est une scie équipée d'une lame circulaire (18).

15. Outil mécanique selon l'une quelconque des revendications précédentes, dans lequel le bloc d'indexage est monté en vue d'accomplir un mouvement réglable vis-à-vis du bras, l'outil mécanique possédant en outre une paire de vis (90 ; 92) de réglage fin, chacune des vis étant vissée à travers le bras, en portant contre le bloc, les vis étant respectivement en contact avec le bloc d'indexage dans des directions globalement opposées, sachant que les vis permettent un réglage de l'angle de biseau prédéterminé.

16. Outil mécanique selon l'une quelconque des revendications précédentes, comprenant en outre un boulon de réglage traversant le gradin dans une position de contact avec la goupille à déclic, une rotation du boulon faisant varier l'angle de biseau prédéterminé.
